# FASCICULE DE BREVET EUROPEEN

(11) **EP 1 187 477 B1**
(45) Date de publication et mention de la délivrance du brevet: **04.04.2012**
(21) Numéro de dépôt: 01000422.4
(22) Date de dépôt: 05.09.2001
(51) Int. Cl.: H04N 7/167, H04N 5/913

(54) **Appareil de réception et d'enregistrement d'information et un procédé associé**
Gerät und Verfahren zum Empfangen und Aufzeichnen von Information
Device and method for receiving and recording information

(30) Priorité: 07.09.2000 FR 0011434
(43) Date de publication de la demande: 13.03.2002
(73) Titulaire: SAGEMCOM BROADBAND SAS, 92500 Rueil Malmaison (FR)
(72) Inventeur: Chevreul, Jean-Jacques, 78360 MONTESSON (FR)
(74) Mandataire: Schmit, Christian Norbert Marie

(56) Documents cités:
- EP-A- 0 691 787
- EP-A- 0 858 184
- EP-A- 0 936 774
- GB-A- 2 099 616
- US-A- 5 870 476
- SCHNEIER B ED - SCHNEIER B: "APPLIED CRYPTOGRAPHY. PROTOCOLS, ALGORITHMS, AND SOURCE CODE IN C, PASSAGE", 1 January 1996 (1996-01-01), APPLIED CRYPTOGRAPHY : PROTOCOLS, ALGORITHMS, AND SOURCE CODE IN C, NEW YORK, NY : JOHN WILEY & SONS, US, PAGE(S) 180-184, 220 - 222, XP002309006, ISBN: 978-0-471-12845-8

## Description

L'invention a pour objet un appareil de réception et d'enregistrement d'information et un procédé associé. Le domaine de l'invention est celui des appareils pouvant recevoir des informations et stocker ces informations. De plus de tels appareils doivent assurer un accès limité et contrôlé aux informations stockées. De tels appareils sont par exemple des récepteurs décodeurs de télévision qui permettent d'enregistrer des programmes diffusés via un flux de télévision.

Un but de l'invention est d'assurer un chiffrage robuste des informations enregistrées sur des moyens de stockage d'informations de l'appareil. Un autre but de l'invention est de favoriser l'utilisation de moyens de stockage standards dans de tels appareils.

Dans l'état de la technique on connaît des récepteurs décodeurs de télévision qui comportent des moyens qui leur permettent d'enregistrer des programmes reçus via un flux de télévision. Ces moyens sont utilisés soit en remplacement d'un magnétoscope pour enregistrer un film complet, soit pour éviter à un utilisateur du récepteur décodeur de télévision de manquer une partie de l'émission qu'il est en train de regarder s'il est contraint de s'éloigner de son récepteur de télévision. Au cas où il serait contraint de s'éloigner, il active un mode décalé ce qui provoque l'enregistrement par l'appareil de l'émission que l'utilisateur est en train de regarder. Lorsqu'il est à nouveau en mesure de regarder son écran de télévision, l'utilisateur visualise alors l'émission à partir du moment où il a du s'absenter, l'appareil continue à enregistrer l'émission en temps réel. Ainsi par rapport à la diffusion de l'émission l'utilisateur la visualise légèrement en retard. Le retard correspond au temps de son absence. Si on utilise le moyen de stockage pour remplacer un magnétoscope alors l'utilisateur déclenche l'enregistrement et peut choisir de revisualiser les informations enregistrées comme bon lui semble.

Les appareils de l'état de la technique utilisent plusieurs formes des moyens de stockage. Une première forme consiste à utiliser de la mémoire flash. En générale ce type de mémoire se présente sous forme de puce et est directement soudé sur le circuit électronique principal de l'appareil. L'avantage de ce système est que si aucun port de communication n'est prévu dans l'appareil pour aller lire le contenu de ces mémoires, le contenu de ces mémoires n'est accessible que par un microprocesseur de l'appareil. Ainsi les informations contenues dans ces mémoires ne sont pas dissociables du récepteur décodeur. L'inconvénient de ce mode de réalisation est que ce type de mémoire est très onéreux. Ce mode de réalisation n'est donc en général retenu que pour une application de type visualisation décalée, et encore que si le temps de décalage n'est pas trop important. En effet, pour enregistrer une émission qui durerait environ deux heures, il faut compter environ 5 Go de mémoire. A l'heure actuelle cela est totalement inconcevable, économiquement, en utilisant des mémoires flash.

Un autre mode de réalisation de l'état de la technique est d'utiliser des unités de stockage traditionnelles. Par traditionnelle on peut comprendre des disques durs de type disque dur d'ordinateur personnel. Ces disques sont relativement bons marchés et ont des capacités compatibles avec les applications que l'on souhaite effectuer. En effet, l'utilisation d'un disque permet de réaliser à la fois l'application visualisation décalée et l'application magnétoscope. De plus l'utilisation de tels disques permet de modifier simplement la configuration matérielle d'un récepteur décodeur. En effet, en utilisant des disques par exemple IDE il est très facile de démonter une coque de l'appareil et de changer un tel disque dur, surtout si les connexions avec ce disque dur sont établies via un contrôleur IDE standard et une nappe IDE. Cette opération aura pu être volontairement prévue par le constructeur afin de permettre par exemple l'achat ultérieur de l'option disque ou le remplacement par l'utilisateur du disque initial lorsque des unités de disque de plus grande capacité deviendront disponibles.

Cependant cette solution présente des inconvénients quant à l'accessibilité aux données enregistrées sur le disque dur. En effet, comme on vient de le dire le disque dur est facilement accessible en démontant le boîtier de l'appareil de réception décodage. Dès lors il devient facile d'extraire le disque dur du boîtier de réception de télévision et de le brancher sur un ordinateur personnel pour récupérer les données qui y sont écrites. Dans la mesure où ces données sont numériques et donc quasiment inaltérables le possesseur d'un tel disque dur est alors en mesure de réaliser autant de copies qu'il le souhaite de l'information qui y est enregistrée. De plus ces copies seront d'une qualité irréprochable par rapport à l'original. Des solutions de cryptage ont été envisagées pour crypter les informations enregistrées sur ces disques durs. Cependant ces solutions sont mises en oeuvre par des logiciels qui sont exécutés par de la logique de commande du boîtier de réception de télévision. Au bout d'un certain temps, relativement court en général, ces logiciels sont accessibles notamment via Internet. Il est dès lors possible d'extraire l'information cryptée du disque dur en le connectant à un ordinateur personnel et d'exécuter le programme de décryptage sur l'ordinateur personnel. Dans l'état de la technique, une fois qu'une information est enregistrée sur un disque dur, il n'est donc plus possible de la contrôler.

L'art antérieur connaît, par la demande de brevet européen N° EP-A-0 961 787, un appareil conforme au préambule de la revendication 1.

L'invention résout ces problèmes en chiffrant les informations d'une manière propre à chaque appareil de réception décodage de télévision. Cela revient en fait à apparier un appareil et les informations contenues sur un moyen de stockage. De plus les informations non chiffrées ne sont pas facilement accessibles dans l'appareil selon l'invention. L'information est reçue par l'appareil, via une antenne par exemple, telle qu'elle a été émise par le producteur de cette information. Cette information reçue subit alors un certain nombre de traitements dans l'appareil. Avant d'être écrite sur le dispositif de stockage, par exemple un disque dur, l'information passe par un dispositif de chiffrement. Le dispositif de chiffrement est d'une part connecté à un bus de l'appareil, d'autre part connecté à un contrôleur IDE par exemple. Le contrôleur IDE permet d'utiliser un disque standard du marché comme moyen de stockage. Les informations qui circulent alors sur le bus IDE sont chiffrées. Alors que les informations qui circulent sur le premier bus ne le sont pas. Il n'est cependant pas aisé d'accéder aux informations sur le premier bus. En effet, pour cela il faudrait manipuler la carte électronique principale du décodeur. Le dispositif de chiffrement utilise une clef propre à l'appareil pour chiffrer les informations à enregistrer.

Ce dispositif peut utiliser des principes de chiffrement de type bloc par exemple DES (Data Encryption Syste), voir même "scrambling type DVB", ou de type "stream" plus simple utilisant un générateur de séquence pseudo aléatoire. La clef qui sert à ce chiffrement est de préférence enfouie dans le décodeur. Par exemple la clef est écrite dans une mémoire de type EEPROM à la fabrication de l'appareil de réception décodage. L'EEPROM est alors verrouillée afin qu'on ne puisse plus lire son contenu. La clef de chiffrement spécifique à chaque unité de ce type d'appareil est de préférence déterminée par un processus aléatoire, par exemple la mesure d'un bruit blanc. Dans une variante de l'invention la clef de chiffrement est modifiée par un ou des attributs propre aux informations à chiffrer. Cela rend le processus de chiffrement plus robuste encore.

L'invention a donc pour objet un appareil de réception et de décodage d'information comportant des moyens pour recevoir un flux d'information, des moyens pour extraire de ce flux des informations, des moyens pour effectuer des traitements sur ces informations, des moyens pour stocker ces informations caractérisées en ce que:
- les moyens pour traiter comporte un dispositif de chiffrement pour chiffrer, avant enregistrement dans les moyens de stockage, des informations issues du flux d'information,
- le dispositif de chiffrement comporte une mémoire non volatile pour enregistrer une clef de chiffrement spécifique à chaque appareil.

L'invention a aussi pour objet un procédé de réception et de décodage d'information dans lequel:
- on reçoit un flux d'information,
- on extrait des informations de ce flux,
- on enregistre ces informations sur une unité de stockage, caractérisé en ce que:
- on lit une clef de chiffrement propre à chaque appareil mettant en oeuvre le procédé et préenregistré dans une mémoire non volatile,
- on chiffre des informations extraites à partir de la clef de chiffrement,
- on enregistre le résultat du chiffrement sur l'unité de stockage.

L'invention sera mieux comprise à la lecture de la description qui suit, et à l'examen des figures qui l'accompagnent. Les figures montrent :
- Figure 1 : une illustration de moyens utiles à la réalisation d'un appareil selon l'invention ;
- Figure 2 : une illustration d'étape du procédé selon l'invention.

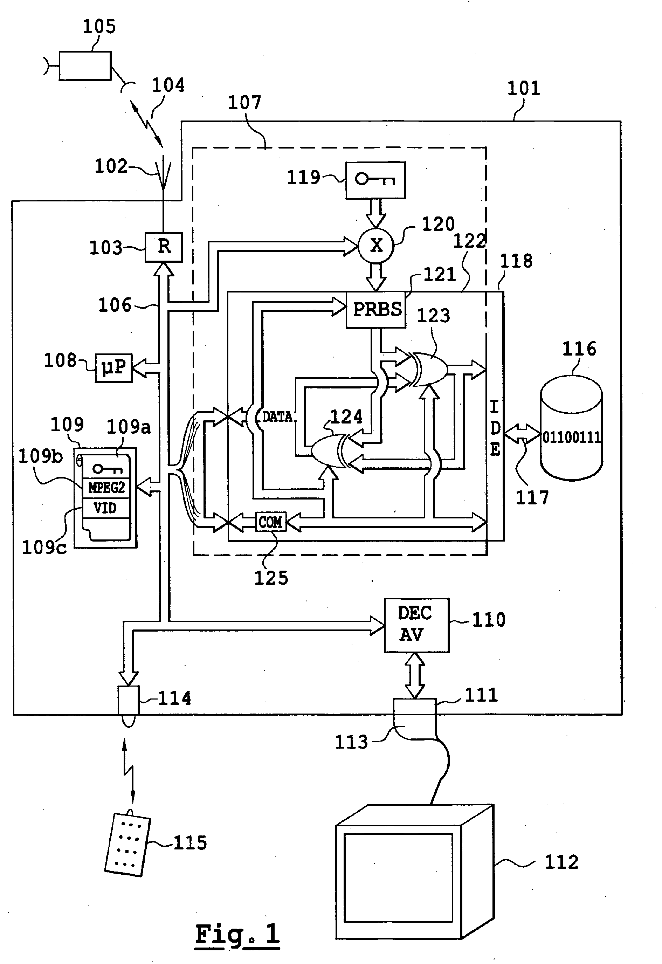

Dans la description qui suit le dispositif de chiffrement du type "stream cyphering" basé sur l'utilisation d'un générateur de séquence pseudo aléatoire n'est décrit qu'à titre d'exemple de dispositif de chiffrement. La figure 1 montre un appareil 101 selon l'invention. Dans la description on considère que l'appareil 101 est un boîtier 101 récepteur décodeur de télévision. Le boîtier 101 comporte une antenne 102 connecté à des circuits 103 de démodulation et de démultiplexage. Dans l'illustration, on considère que l'antenne 102 permet d'établir une liaison 104 hertzienne avec un satellite 105. Un flux d'information diffusé par le satellite 105 via la liaison 104 est contrôlé par un opérateur de télévision. Dans la pratique, le flux d'information de télévision peut parvenir au boîtier 101 via tout autre mode de connexion, par exemple une connexion câblée. Les informations parviennent au boîtier 101 via l'antenne 102 sous une forme modulée. Les circuits 103 permettent de démoduler ces informations et d'extraire parmi toutes celles présentes dans le flux d'information celles qui sont destinées à l'utilisateur du boîtier 101. Ces étapes d'extraction de l'information sont bien connues du domaine des récepteurs décodeurs de télévision.

L'antenne 102 et le circuit 103 constituent donc des moyens pour recevoir un flux d'information.

Le circuit 103 est connecté à un premier bus 106. On rappelle qu'un bus est un ensemble de fils ou de pistes comportant ces éléments en nombre suffisants pour véhiculer des signaux de données, d'adresses, de commandes, d'interruptions, d'horloge et d'alimentation.

Le bus 106 est aussi connecté à un dispositif 107 de chiffrement. Le dispositif 107, ainsi que les autres dispositifs du boîtier 101 sont commandés par un microprocesseur 108, lui-même commandé par des codes instructions contenus dans une mémoire 109. Le microprocesseur 108 et la mémoire 109 sont eux aussi connectés au bus 106. La mémoire 109 comporte plusieurs zones. Parmi ces zones la mémoire 109 comporte une zone 109a dans laquelle sont enregistrés des codes instructions qui commandent le microprocesseur lorsque celui-ci effectue des actions relatives au dispositif de chiffrement. La mémoire 109 comporte aussi une zone 109b qui comporte des codes instructions qui commandent le microprocesseur lorsque celui-ci effectue des actions relatives au décodage d'informations codées selon la norme MPEG2. En effet, les informations vidéo reçues par le boîtier 101 sont le plus souvent codées au format MPEG2. La mémoire 109 comporte également une zone 109C vidéo dans laquelle des informations audio vidéo sont stockées d'abord sous forme codée MPEG2 puis, sous forme décodée après leur traitement par un décodeur audio vidéo 110. Ce décodeur 110 audio vidéo est connecté au bus 106 d'une part et à un connecteur 111 d'autre part qui permet de brancher un écran 112 de télévision sur le boîtier 101. Cette connexion se fait par exemple via une prise péritel 113. La mémoire 109 comporte aussi des codes instructions qui permettent de gérer des signaux produits par un dispositif 114, connecté au bus 106, récepteur infrarouge. Le dispositif 114 reçoit des ondes infrarouges émises par l'utilisateur du boîtier 101, via une télécommande 115. La télécommande 115 permet à l'utilisateur du boîtier 101 de commander ce boîtier. Entre autres, elle lui permet de choisir quel programme le boîtier 101 doit décoder et afficher sur l'écran 112, de choisir d'enregistrer des informations sur un disque dur 116 du boîtier 101, de choisir de relire les informations sur le disque dur 116. Le disque dur 116 est connecté au dispositif 107 de chiffrement via un deuxième bus 117. Le deuxième bus 117 est d'autre part connecté à un contrôleur IDE qui assure l'interface entre le bus 117 et le dispositif de chiffrement 107. Ainsi des informations en clair sont fournies via le bus 106 au dispositif 107 qui les chiffre et les place à la disposition du contrôleur 118 IDE pour que celui-ci envoie les ordres d'écriture au disque 116. Ainsi toutes les informations circulant sur le bus 117, le bus qui est facilement accessible à l'utilisateur du boîtier 101, sont chiffrées au même titre que les informations écrites sur le disque dur 116. Dans l'exemple on considère que l'on utilise un disque dur ayant une interface IDE. Dans la pratique d'autres interfaces peuvent être utilisées, notamment ultra-DMA ou SCSI.

Le dispositif 107 comporte une mémoire 119 pour enregistrer une clef de chiffrement. Une clef de chiffrement est un nombre que l'on code sur un certain nombre de bits. La longueur de la clef pourra être quelconque mais dans la pratique 32 ou 48 bits conviendront parfaitement. Le dispositif 107 comporte plusieurs éléments dont la mémoire 119. Ces éléments ont été représentés de manière discrète afin de simplifier l'explication. Mais dans la pratique tous ces éléments sont implantés dans un seul et même composant, par exemple de type EPLD. Une EPLD est un composant électriquement programmable. Un tel composant peut être programmé, et en général sa programmation ne peut pas être relue, ce qui garantit la confidentialité de sa fonction. La mémoire 119 est par exemple écrite avec un nombre généré de manière aléatoire. La génération de ce nombre aléatoire peut se faire par la mesure d'un bruit blanc par exemple. Un tel bruit blanc peut être mesuré à l'aide d'un capteur qui mesure un bruit ambiant et convertit une mesure à un instant donné en un échantillon numérique. Cet échantillon devient alors la clef de chiffrement qui sera enregistré dans la mémoire 119.

La mémoire 119 est connectée à un circuit 120 de modification de clef. Le circuit 120 modifie la clef 119 en fonction d'informations transmises au circuit 120 via le bus 106. Cette modification peut être effectuée en fonction d'un certain nombre d'éléments. Parmi ces éléments on peut citer un attribut de l'enregistrement à effectuer ou un numéro du bloc enregistré. En effet le disque 116, ou l'information à enregistrer, peuvent être divisés en bloc. Cet attribut ou le numéro de bloc peut alors servir à produire la clef de chiffrement par modification de la clef 119.

Comme signalé précédemment le dispositif de chiffrement 122 peut être de nature quelconque, la description qui suit donne l'exemple simple d'un chiffrement de flux (stream cyphering) basé sur l'utilisation d'un générateur de séquence pseudo aléatoire. La modification de la clef 119 permet de modifier les paramètres d'initialisation d'un circuit 121 de génération de séquences pseudo aléatoires. Le circuit 121 est d'une part connecté au circuit 120 et d'autre part à un circuit 125 de commande du dispositif 122. L'utilité de modifier la clef est que le traitement effectué par le dispositif 107 varie alors d'un programme à chiffrer à l'autre, ce qui rend la détermination de la fonction du dispositif 107 et surtout de la clef 119, encore plus dure. Dans cet esprit, il est envisageable d'utiliser un événement aléatoire, par exemple l'heure de début d'enregistrement, pour modifier la clef. Il faut cependant garder une trace des paramètres utilisés pour réaliser le chiffrement et ce, afin que le déchiffrement soit possible. En général les paramètres de modification de la clef sont enregistrés dans un format connu et dans un en-tête non chiffré de l'information chiffrée.

Le circuit 121 génère, à partir de leur séquence d'initialisation, une séquence de nombres pseudo aléatoires. Dans la pratique un générateur de nombres pseudo aléatoires fonctionne à partir d'un nombre initial qu'on lui fournit et d'un certain nombre de registres à décalage. Le résultat de décalages permet de produire en sortie un nombre. Ces registres sont rebouclés sur eux-mêmes de diverses manières afin de produire un flux continu de nombres. Ce circuit est dit de génération de séquences pseudo aléatoires car la séquence de nombres qu'il génère dépend de ses conditions d'initialisation. Ces conditions d'initialisation dépendent elles-mêmes de la clef enregistrée dans la mémoire 119 et des paramètres appliqués au modificateur de clef 120. Un tel circuit de génération de séquences pseudo aléatoires génère une séquence identique pour des conditions d'initialisation identiques. C'est pour cela qu'on lui attribue ce qualificatif de pseudo.

Dans l'exemple choisie l'unité 122 de chiffrement inclut le générateur 121 de séquence pseudo aléatoire. La sortie du circuit 121 est connectée à une première porte XOR (OU EXCLUSIF) 123 de l'unité 122. L'unité 122 est aussi connectée au bus 106. Sur une deuxième entrée de la porte 123 on applique des signaux de donnée issus du bus 106. Ainsi la porte 123 effectue une opération de OU EXCLUSIF entre des éléments issus de la partie données du bus 106, et des éléments générés par le circuit 121. La sortie de la porte 123 est connectée à une entrée de données du contrôleur 118 IDE. La porte 123 est d'autre part connectée au circuit 125 de commande. Le circuit 125 est connecté : la partie commande du bus 106. Le circuit 125 assure donc la commande les différents éléments du dispositif 122, et ce à partir d'ordres reçus via le bus 106. Le microprocesseur 108 commande donc le dispositif 122 via le bus 106 et le circuit 125. Il est ainsi possible au microprocesseur 108 de commander l'activité de la porte 123. Le microprocesseur 108 peut ainsi commander la combinaison elle-même, c'est-à-dire si la combinaison est effectuée ou pas. En effet, il demeure toujours possible d'écrire des informations sur le disque 116 sans qu'elles soient chiffrées par le dispositif 107. Pour cela il suffit au microprocesseur 108 de désactiver la porte 123, alors les éléments à la sortie de la porte 123 seront identiques aux éléments transportés par la partie données du bus 106.

La figure 1 montre aussi que l'unité 122 comporte une deuxième porte 124 XOR. La sortie de la porte 124 est connectée à la partie données du bus 106. Une entrée de la porte 124 est connectée à la sortie du circuit 121. Une deuxième entrée de la porte 124 est connectée à l'entrée données du contrôleur 118 IDE. D'autre part la porte 124 est connectée au circuit 125. Ainsi la porte 124 peut être commandée de la même manière que la porte 123. Dans la pratique, le microprocesseur 108, commandé par les codes instructions de la mémoire 109, active la porte 123 lorsqu'il doit effectuer une écriture sur le disque 116. Le microprocesseur 108 active la porte 124 lorsqu'il doit effectuer une opération de lecture sur le disque 116. Pour les opérations de lecture et d'écriture, le circuit 125 est connecté au contrôleur 118 IDE. Bien sûr le contrôleur 118 assure à la fois la traduction des commandes et le transfert des données du dispositif 107 vers le disque 116 et ce via le bus 117. Dans une variante de l'invention on se dispense du circuit 125 et on connecte directement la partie commande du bus 106 aux éléments 121, 123, 124 et 118.

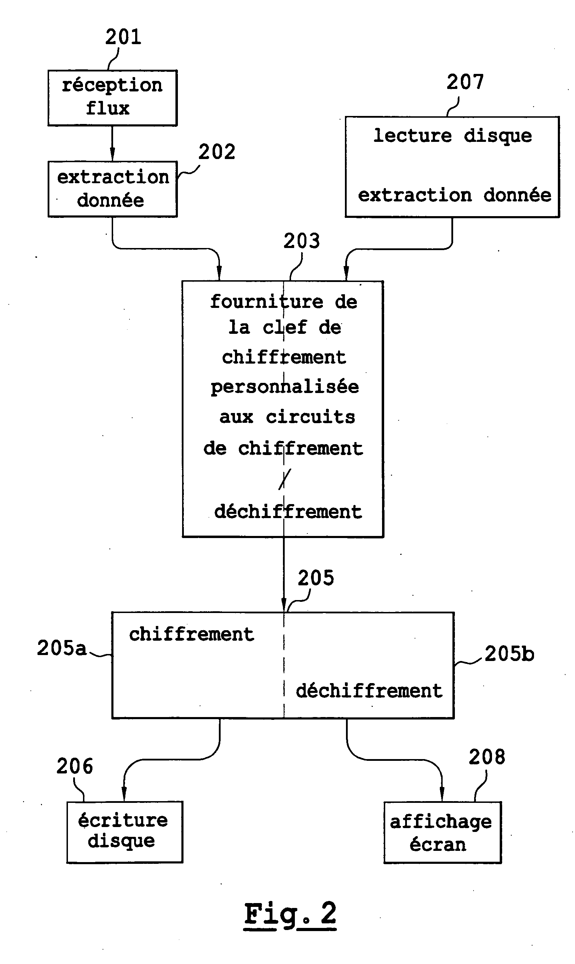

La figure 2 montre une étape 201 préliminaire correspondant à la réception d'un flux d'informations par l'appareil 101. Dans l'étape 201, l'appareil 101 reçoit, via l'antenne 102, des informations sous forme modulées. Ces informations sont démodulées par le circuit 103. On passe à une étape 202 d'extraction des données. Dans l'étape 202, le microprocesseur 108, commandé par les codes instructions de la zone 109a, commande le circuit 103 pour qu'il sélectionne, parmi des informations reçues, des informations pertinentes et éventuellement déchiffre ces informations pertinentes.

Ces informations sélectionnées sont finalement écrites, via le bus 106, dans la zone 109C où elles sont à la disposition du microprocesseur 108. Dans l'exemple on considère que les informations pertinentes correspondent à un programme vidéo. L'utilisateur de l'appareil 101 a donné un ordre grâce à la télécommande 115 pour que le programme vidéo actuellement reçu soit enregistré sur le disque dur 116. Dans l'étape 202 on extrait donc du flux d'informations reçues par l'appareil 101 des informations correspondant au programme audio vidéo que souhaite enregistrer l'utilisateur de l'appareil 101. On passe alors à une étape 203 de fourniture de la clef de chiffrement personnalisée aux circuits de chiffrement.

Dans l'étape 203, le microprocesseur 108 commandé par les codes instructions de la zone 109a envoie des instructions au circuit 120. Ces instructions servent au circuit 120 à modifier la clef enregistrée dans la mémoire 119. Ces instructions comportent aussi des informations propres aux informations que vient d'extraire le microprocesseur 108 parmi celles qui sont produites par le circuit 103. Cette information caractérise le programme enregistré. Il peut par exemple s'agir de son titre. A partir du titre, du programme enregistré et du contenu de la mémoire 119, le circuit 120 produit donc des données d'initialisation qu'il envoie au circuit 121. En général cette donnée d'initialisation est un mot de 16, 32, 48 ou plus de bits. On considère ici que le circuit 121 est un opérateur de séquence pseudo aléatoire.

Le circuit 121 vient de recevoir un mot d'initialisation. Il reçoit d'autre part, via le bus 106, une commande pour générer une séquence pseudo aléatoire à partir de ce mot d'initialisation. Le circuit 121 comporte un certain nombre de registres interconnectés. A un instant donné ces registres sont dans un état donné. Le circuit 121 produit alors à partir de l'état de ces registres un nombre qui appartient à la séquence pseudo aléatoire. Ce nombre est utilisé dans l'étape 205 de chiffrement dans laquelle il est combiné avec les données extraites. Dans la pratique l'activité de l'appareil 101 est cadencée par une horloge. Il en va de même pour l'activité de l'unité 122 incluant le circuit 121. Le circuit 121 reçoit donc un signal d'horloge lui indiquant qu'il doit produire un nombre de la séquence pseudo aléatoire. A chaque fois que le circuit 121 reçoit ce signal, il produit un nombre et modifie l'état de ses registres internes. Le nombre produit dépend évidemment de l'état des registres internes. L'état initial des registres internes dépend du mot d'initialisation. Ainsi à chaque coup d'horloge le circuit 121 produit un nombre et modifie l'état de ses registres internes. L'ensemble des nombres produits par le circuit 121 constitue la séquence pseudo aléatoire.

Dans l'étape 205, l'unité 122 combine les nombres produits par le circuit 121 avec les informations extraites dans l'étape 202. Cela est lié au mode de chiffrement que l'on a choisie de décrire. Un autre mode de chiffrement impliquerait d'autres actions dans les étapes 203 et 205.

On considère ici que l'on est dans un processus d'écriture sur le disque 116. Il s'agit donc en fait d'une étape 205a. Pour simplifier l'explication on considère que l'ensemble de l'activité de l'unité 122 est cadencée à la même fréquence que l'activité du circuit 121, et que le temps de propagation des signaux est nul. Ainsi à chaque fois que l'unité 122 a à sa disposition un mot produit par le circuit 121, il a aussi à sa disposition un mot faisant partie des informations audio vidéo extraites par le microprocesseur 108. Au coup d'horloge ces informations sont soumises à la porte 123. Comme nous sommes dans une étape d'écriture sur le disque 116, le microprocesseur 108 a commandé l'unité 122 afin de désactiver la porte 124 et d'activer la porte 123. La porte 123 est activée en mode chiffrement. On rappelle que la porte 123 peut être commandée pour laisser passer les informations issues de la partie données du bus 106 sans les chiffrer. Les informations présentes à l'entrée de la porte 123 sont combinées avec une fonction XOR. Ce mot combiné est donc disponible à la sortie de la porte 123. A chaque signal d'horloge, la porte 123 produit un nouveau mot combiné à partir des mots produits par le circuit 121 et des mots extraits par le microprocesseur 108. On passe à une étape 206 d'écriture sur le disque. Dans cette étape, l'activité du contrôleur 118 est cadencée à la même fréquence que l'activité du circuit 121 et de l'unité 122. Le contrôleur 118 écrit donc les mots produits par la porte 123 au fur et à mesure que cette porte les produits. Ces mots seront alors écrits dans un fichier sur le disque 116. L'ensemble de ces mots réunis dans ce fichier sur le disque 116 constitue le fichier chiffré.

La figure 2 montre une deuxième étape préliminaire 207. L'étape 207 correspond à un schéma de relecture du contenu du disque 116. On considère alors que le contenu du disque 116 est chiffré. Dans l'étape 207, le microprocesseur 108 commandé par les codes instructions de la mémoire 109a envoie un ordre de lecture sur le disque 116. Cet ordre de lecture est accompagné d'un ordre pour désactiver la porte 123 et pour activer la porte 124. Dans un premier temps la porte 124 est activée en mode non chiffré. C'est-à-dire que les informations lues sur le disque 116 sont obtenues par le microprocesseur sous la forme telle qu'enregistrée sur le disque 116. Cela permet au microprocesseur 108 de lire, par exemple, le titre du programme que l'appareil 101 doit afficher sur l'écran 112. En effet, l'étape 207 initie en général, un processus de revisualisation des informations enregistrées sur le disque 116. Il s'agit donc d'une première extraction de données du disque dur mais ces données extraites ne sont pas soumises au traitement du dispositif 107. On passe alors de l'étape 207 à l'étape 203. Dans l'étape 203 le microprocesseur utilise l'information qu'il vient de lire sur le disque dur pour commander le circuit 120 qui modifie la clef enregistrée dans la mémoire 119. On obtiendra donc ainsi une clef modifiée qui sera utilisée pour initialiser le circuit 121 de génération d'une séquence pseudo aléatoire.

Ici on remarque le mot utilisé pour modifier la clef lors de l'écriture du programme ou de sa relecture est identique. En effet, on a déjà dit que le générateur 121 produisait une séquence pseudo aléatoire fonction du mot utilisé pour l'initialiser. Si on utilise le même modificateur de clef, la séquence produite sera donc la même. Ceci est utile car si on applique à un échantillon donné deux combinaisons successives avec des XOR et avec le même mot, on obtient une fonction IDENTITE. Ainsi la séquence pseudo aléatoire utilisée pour le chiffrage des données et leur déchiffrage est rigoureusement identique. De l'étape 203 on passe à une étape 205b. Dans l'étape 205b le microprocesseur 108 commande la porte 124 pour que celle-ci soit en mode déchiffrage, c'est-à-dire pour qu'elle effectue une combinaison entre les mots produits par le circuit 121 et les mots lus sur le disque 116. Ainsi à la sortie de la porte 124 on aura des mots en clair qui pourront être utilisés par le microprocesseur 108 dans une étape 208 pour écrire une image dans la mémoire 109C vidéo.

Dans une variante de l'invention on n'utilise pas le circuit 120 mais on utilise directement le contenu de la mémoire 119 pour initialiser le circuit 121. Dans ce cas on est donc dispensé d'une relecture d'une information en clair sur le disque dur. En effet, on n'a plus besoin de l'information permettant de modifier la clef pour régénérer exactement la séquence pseudo aléatoire qui avait servi à circuler les informations enregistrées sur le disque. Cependant cette variante est légèrement plus sensible au piratage que la précédente.

## Revendications

1. Appareil (101) de réception et de décodage d'information comportant des moyens (102, 103) pour recevoir un flux d'information, des moyens (103, 108, 109) pour extraire de ce flux des informations audio vidéo à enregistrer, des moyens (110) pour décoder ces informations audio vidéo, des moyens (118, 116) pour stocker ces informations comportant
- un dispositif (107) de chiffrement pour chiffrer, avant enregistrement dans les moyens de stockage, les informations audio vidéo extraites du flux d'information,
- le dispositif de chiffrement comporte une mémoire (119) non volatile pour enregistrer une clef de chiffrement spécifique à l'appareil, ladite mémoire étant verrouillée de sorte que son contenu reste confidentiel,
ledit appareil étant **caractérisé en ce que**
- le dispositif de chiffrement comporte des moyens (121) de générations d'une séquence pseudo aléatoire destinée à chiffrer les informations audio vidéo extraites, ladite séquence pseudo aléatoire étant générée en fonction d'une clef de chiffrement modifiée à partir de la clef de chiffrement contenue dans une mémoire verrouillée,
- et **en ce que** les paramètres de modification de ladite clef sont enregistrés dans un format connu et dans un en-tête non chiffré d'une information chiffrée.

2. Appareil selon la revendication précédente, **caractérisé en ce que** le dispositif de chiffrement comporte des circuits (120) de modification de clefs connectés à la mémoire non volatile, lesdits circuits étant configurés de sorte à recevoir en entrée la clef de chiffrement verrouillée et au moins un attribut propre aux informations à chiffrer et à fournir en sortie la clef de chiffrement modifiée.

3. Appareil selon l'une des revendications précédentes, **caractérisé en ce que** le dispositif de chiffrement comporte un composant (107) programmable dans lequel est enregistrée la clef de chiffrement verrouillée.

4. Appareil selon l'une des revendications 1 à 3 **caractérisé en ce que** la clef de chiffrement est enfouie dans l'appareil au moment de sa fabrication.

5. Appareil selon l'une des revendications 1 à 4 **caractérisé en ce que** la clef de chiffrement verrouillée est générée de manière aléatoire.

6. Appareil selon l'une des revendications 1 à 5 **caractérisé en ce que** les moyens (121) de génération de séquence pseudo aléatoire sont connectés aux circuits de modification de clef et à un ensemble de portes logiques configurées de sorte à combiner le flux d'information extrait avec la séquence pseudo aléatoire générée.

7. Appareil selon l'une des revendications 1 à 6, **caractérisé en ce qu'**il comporte :
- un premier bus (106) de données connecté, au dispositif de chiffrement et à un écran (112) de télévision, sur lequel circule le flux d'information non chiffré, et
- un second bus (117) de données, connecté au moyen de stockage par l'intermédiaire du dispositif de chiffrement, sur lequel circule le flux d'information chiffré.

8. Appareil selon l'une des revendications 1 à 7 **caractérisé en ce que** l'appareil est un récepteur décodeur de télévision.

9. Procédé de réception et de décodage d'information dans lequel:
- on reçoit (201) un flux d'information,
- on extrait (202) des informations audio vidéo de ce flux,
- on enregistre (206) ces informations audio vidéo sur des moyens de stockage,
**caractérisé en ce que**:
- on génère une séquence pseudo aléatoire en fonction d'une clef de chiffrement modifiée à partir d'une clef de chiffrement spécifique à un appareil de réception et de décodage et contenue dans une mémoire non volatile, ladite mémoire étant verrouillée de sorte que son contenu reste confidentiel,
- on chiffre des informations audio vidéo extraites à partir de ladite séquence pseudo aléatoire étant générée,
- on enregistre le résultat du chiffrement sur les moyens de stockage, via un bus de données spécifique,
- les paramètres de modification de ladite clef sont enregistrés dans un format connu et dans un en-tête non chiffré de l'information chiffrée.

10. Procédé selon la revendication 9 **caractérisé en ce que**:
- on relit (207) des informations audio vidéo sur l'unité de stockage,
- on déchiffre (203 - 205) ces informations audio vidéo en leur appliquant le même procédé que pour le chiffrement, ou un procédé symétrique,
- on produit (208) une image à l'aide des informations déchiffrées.

11. Procédé selon l'une des revendications 9 à 10 **caractérisé en ce que** les informations reçues et décodées sont des informations de télévision.

## Claims

1. Apparatus (101) for receiving and decoding information, comprising means (102, 103) for receiving a flow of information, means (103, 108, 109) for extracting from this flow audio/video information to be recorded, means (110) for decoding this audio/video information, means (118, 116) for storing this information comprising
- a ciphering device (107) for ciphering, before registering into the storing means, the audio/video information extracted from the flow of information,
- wherein the ciphering device comprises a non-volatile memory (119) for recording a ciphering key specific to the apparatus, said memory being locked so that its content remains confidential,
said apparatus being **characterized in that**
- the ciphering device comprises means (121) for generating a pseudo-random sequence intended to cipher the audio/video information extracted, said pseudo-random sequence being generated according to a ciphering key modified from the ciphering key contained in a locked memory,
- and **in that** the modification parameters for said key are recorded in a known format into a non-ciphered heading of an ciphered piece of information.

2. Apparatus according to the preceding claim, **characterized in that** the ciphering device comprises key modification circuits (120) connected to the non-volatile memory, said circuits being configured so as to receive at their inputs the locked ciphering key and at least one attribute specific to the information to be ciphered and so as to output the modified ciphering key.

3. Apparatus according to anyone of the preceding claims, **characterized in that** the ciphering device comprises a programmable component (107) in which the locked ciphering key is recorded.

4. Apparatus according to anyone of the claims 1 to 3, **characterized in that** the ciphering key is buried into the apparatus when it is made.

5. Apparatus according to anyone of the claims 1 to 4, **characterized in that** the locked ciphering key is generated in a random way.

6. Apparatus according to anyone of the claims 1 to 5, **characterized in that** the means (121) for generating a pseudo-random sequence are connected to the key modification circuits and a set of logical gates configured so as to combine the flow of information extracted with the pseudo-random sequence generated.

7. Apparatus according to anyone of the claims 1 to 6, **characterized in that** it comprises:
- a first data bus (106) which is connected to the ciphering device and a television screen (112) and on which the non-ciphered flow of information flows, and
- a second data bus (117) which is connected to the storing means via the ciphering device and on which the ciphered flow of information flows.

8. Apparatus according to anyone of the claims 1 to 7, **characterized in that** the apparatus is a TV digital receiver.

9. Method for receiving and decoding information in which:
- a flow of information is received (201),
- audio/video information is extracted (202) from this flow,
- this audio/video information is recorded (206) into storing means,
**characterized in that**:
- a pseudo-random sequence is generated according to a ciphering key modified from a ciphering key specific to a reception and decoding apparatus and contained in a non-volatile memory, said memory being locked so that its content remains confidential,
- the audio/video information extracted from said pseudo-random sequence generated is encoded,
- the result from ciphering is recorded into the storing means via a specific data bus,
- the modification parameters for said key are recorded in a known format into a non-ciphered heading of the ciphered information.

10. Method according to claim 9, **characterized in that**:
- audio/video information is read again (207) from the storage unit,
- this audio/video information is deciphered (203 - 205) by using the same method as for ciphering, or a symmetrical method,
- an image is produced (208) by means of the deciphered information.

11. Method according to anyone of the claims 9 to 10, **characterized in that** the information received and decoded is television information.

## Patentansprüche

1. Apparat (101) zum Empfangen und Dekodieren von Informationen mit Mitteln (102, 103) zum Empfangen eines Informationsflusses, Mitteln (103, 108, 109) zum Extrahieren von zu speichernden Audio/Video-Informationen aus diesem Fluss, Mitteln (110) zum Dekodieren dieser Audio/Video-Informationen, Mitteln (118, 116) zum Speichern dieser Informationen mit
- einer Chiffrierungsvorrichtung (107) zum Chiffrieren der aus dem Informationsfluss extrahierten Audio/Video-Informationen vor dem Speichern in die Speicherungsmittel,
- wobei die Chiffrierungsvorrichtung eine nichtflüchtige Speicherung (119) zum Speichern eines für den Apparat spezifischen Chiffrierungsschlüssels umfasst, wobei der genannte Apparat verriegelt ist, sodass sein Inhalt vertraulich bleibt, wobei der genannte Apparat **dadurch gekennzeichnet ist, dass**
- die Chiffrierungsvorrichtung Mittel (121) zum Erzeugen einer Pseudozufallssequenz für das Chiffrieren der extrahierten Audio/Video-Informationen umfasst, wobei die genannte Pseudozufallssequenz je nach einem ausgehend vom in einer verriegelten Speichrung enthaltenen Chiffrierungsschlüssel geänderten Chiffrierungsschlüssel erzeugt wird,
- und dass die Änderungsparameter für den genannten Schlüssel in einem bekannten Format in einen nicht-chiffrierten Kopfteil einer chiffrierten Information gespeichert werden.

2. Apparat nach dem vorhergehenden Anspruch, **dadurch gekennzeichnet, dass** die Chiffrierungsvorrichtung an der nichtflüchtigen Speicherung angeschlossene Schlüsseländerungsschaltungen (120) umfasst, wobei die genannte Schaltungen derart ausgebildet sind, dass sie an ihrem Eingang den verriegelten Chiffrierungsschlüssel und wenigstens ein für die zu chiffrierenden Informationen spezifisches Attribut empfangen, und an ihrem Ausgang den geänderten Chiffrierungsschlüssel ergeben können.

3. Apparat nach einem der vorhergehenden Ansprüche, **dadurch gekennzeichnet, dass** die Chiffrierungsvorrichtung einen programmierbaren Bauteil (107) umfasst, in den der verriegelte Chiffrierungsschlüssel gespeichert wird.

4. Apparat nach einem der Ansprüche 1 bis 3, **dadurch gekennzeichnet, dass** der Chiffrierungsschlüssel in den Apparat bei seiner Herstellung versteckt wird.

5. Apparat nach einem der Ansprüche 1 bis 4, **dadurch gekennzeichnet, dass** der verriegelte Chiffrierungsschlüssel zufallsbedingt erzeugt wird.

6. Apparat nach einem der Ansprüche 1 bis 5, **dadurch gekennzeichnet, dass** die Mittel (121) zum Erzeugen einer Pseudozufallssequenz an den Schlüsseländerungsschaltungen und an einer Gesamtheit von logischen Gliedern angeschlossen sind, die derart ausgebildet sind, dass der extrahierte Informationsfluss mit der erzeugten Pseudozufallssequenz kombiniert werden können.

7. Apparat nach einem der Ansprüche 1 bis 6, **dadurch gekennzeichnet, dass** er umfasst:
- einen ersten Datenbus (106), der mit der Chiffrierungsvorrichtung und mit einem Fernsehbildschirm (112) verbunden ist, auf dem der nicht-chiffrierte Informationsfluss fließt, und
- einen zweiten Datenbus (117), der mit dem Speicherungsmittel über die Chiffrierungsvorrichtung verbundener sind, und auf dem der chiffrierte Informationsfluss fließt.

8. Apparat nach einem der Ansprüche 1 bis 7, **dadurch gekennzeichnet, dass** der Apparat ein TV-Digital-Receiver ist.

9. Verfahren zum Empfangen und Dekodieren von Informationen, bei dem:
- ein Informationsfluss empfangen wird (201),
- Audio/Video-Informationen aus diesem Fluss extrahiert werden (202),
- diese Audio/Video-Informationen in Speicherungsmittel gespeichert werden (206),
**dadurch gekennzeichnet, dass**:
- eine Pseudozufallssequenz je nach einem aus einem für einen Dekodierungs- und Empfangsapparat spezifischen, und in einer nichtflüchtigen Speicherung enthaltenen Chiffrierungsschlüssel geänderten Chiffrierungsschlüssel erzeugt wird, wobei die genannte Speicherung verriegelt ist, sodass sein Inhalt vertraulich bleibt,
- aus der genannten Pseudozufallssequenz extrahierte Audio/Video-Informationen erzeugt werden,
- das Chiffrierungsergebnis über einen spezifischen Datenbus in die Speicherungsmittel gespeichert wird,
- die Änderungsparameter für den genannten Schlüssel in einem bekannten Format in einen nicht-chiffrierten Kopfteil der chiffrierten Information gespeichert werden.

10. Verfahren nach Anspruch 9, **dadurch gekennzeichnet, dass**:
- Audio/Video-Informationen aus der Speicherungseinheit wieder gelesen werden (207),
- diese Audio/Video-Informationen entschlüsselt werden (203 - 205), indem man für sie dasselbe Verfahren wie für die Chiffrierung oder ein symmetrisches Verfahren verwendet,
- ein Bild mittels der entschlüsselten Informationen erzeugt wird (208).

11. Verfahren nach einem der Ansprüche 9 bis 10, **dadurch gekennzeichnet, dass** die empfangenen und dekodierten Informationen Fernsehinformationen sind.
